# EUROPÄISCHE PATENTSCHRIFT

(11) **EP 1 549 534 B1**
(45) Veröffentlichungstag und Bekanntmachung des Hinweises auf die Patenterteilung: **05.04.2006**
(21) Anmeldenummer: 03775152.6
(22) Anmeldetag: 16.09.2003
(51) Int. Cl.: B60R 21/34

(54) **VORRICHTUNG ZUM SCHUTZ VON PERSONEN BEI EINEM FRONTALAUFPRALL AUF EIN KRAFTFAHRZEUG**
DEVICE FOR PROTECTING INDIVIDUALS DURING A FRONTAL IMPACT WITH A MOTOR VEHICLE
DISPOSITIF POUR PROTEGER DES INDIVIDUS EN CAS DE CHOC FRONTAL DANS UNE AUTOMOBILE

(30) Priorität: 19.09.2002 DE 10243497
(43) Veröffentlichungstag der Anmeldung: 06.07.2005
(73) Patentinhaber: ISE Innomotive Systems Europe GmbH, 51693 Bergneustadt (DE)
(72) Erfinder: REX, Martin, 51570 Windeck (DE); MIKA, Frank, 51588 Nümbrecht (DE); HARTEBRODT, Raphael, 57489 Drolhagen (DE); LANG, Jozsef, H-1131 Budapest (HU)
(74) Vertreter: Fuchs Mehler Weiss & Fritzsche
(86) Internationale Anmeldenummer: PCT/EP2003/010268
(87) Internationale Veröffentlichungsnummer: WO 2004/028865

(56) Entgegenhaltungen:
- EP-A- 1 293 400
- DE-A- 10 141 628
- DE-A- 19 712 961

## Beschreibung

Die Erfindung bezieht sich auf eine Vorrichtung gemäß dem Oberbegriff des Anspruches 1.

Jährlich ereignen sich zahlreiche Unfälle, bei denen Fußgänger, seien es Kinder oder Erwachsene, bzw. Zweiradfahrer, von einem Kraftfahrzeug angefahren, auf die Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweiradfahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es sind eine Reihe von Möglichkeiten zur Lösung dieses Problems bekannt geworden.

So zeigt die DE 27 37 876 A als Aufprallschutz ein sensorgesteuert auslösbares, den vor der Windschutzscheibe liegenden Fronthaubenbereich in der Fahrzeugbreite überspannendes, folien- oder netzartiges Auffangelement. Diese Lösung verändert mit Nachteil das typische Aussehen einer Motorhaube im Übergangsbereich zur Windschutzscheibe.

Die DE 27 11 338 A zeigt eine vergleichbare Konstruktion, bei der sich ein sensorgesteuert aufblasbarer Luftsack im Aufprallfall in den Übergangsbereich zwischen Windschutzscheibe und Frontscheibe legt. Auch bei dieser Lösung bedarf es einer relativ aufwendigen, den üblichen Grundaufbau verändernden Konstruktion im sogenannten Übergangsbereich.

Die DE 27 11 339 A zeigt Lösungen, bei der die Fronthaube im Aufprallfall längsverschiebbar gehaltert ist und dabei Deformationszonen erzeugt. Diese Lösungen bewirken ebenfalls eine Abkehr von der bewährten Halterung der Fronthaube über das vordere Schloss und die hinteren Scharniere. Ferner besteht die Gefahr, dass bei einem Aufprall mit einem großen Hindernis die Fronthaube in die Windschutzscheibe eindringt.

Die DE 28 14 107 A in Verbindung mit der DE 28 41 315 zeigt ein Lösungsprinzip zur Verringerung der Verletzungsgefahr beim Aufprall von Fußgängern und Zweiradfahrern auf die Fronthaube, das auf der Überlegung beruht, das im hinteren Bereich der Fronthaube liegende, relativ harte und unnachgiebige Aufschlaggebiet wesentlich zu entschärfen. Dies wird durch eine mittels eines Aufprall-Sensors betätigte Vorrichtung zur Verstellung der Fronthaube aus einer Ruheposition in eine demgegenüber angehobene, nachgiebige Aufprallposition, d.h. durch eine sogenannte "aktive Fronthaube" bewirkt. Dadurch, dass die Fronthaube bei der von dem Aufprall-Sensor erfassten Kollision mit einem Fußgänger in eine gegenüber ihrer Ruhe - d.h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Im Fall der vorgenannten DE 28 14 107 A wird dabei die Fronthaube von mindestens einem im Aufprallfall aufblasbaren Gassack angehoben. Die dargestellte Konstruktion ist jedoch nur für Kraftfahrzeuge anwendbar, bei denen die Fronthaube um eine an der vorderen Oberkante des Vorderwagens liegende Achse schwenkbar ist. Bei Kraftfahrzeugen, bei denen die Fronthaube windschutzscheibenseitig über Scharniere drehbar an den Vorderwagen angelenkt ist, ist die bekannte Konstruktion jedoch nicht anwendbar. Ferner besteht im bekannten Fall die große Gefahr, dass bei einem stärkeren Aufprall des Fahrzeuges auf ein Hindernis die Fronthaube in die Windschutzscheibe eindringt. Ferner zeigt die Fronthaube beim Aufprall ein starkes Nachfedern, was die Verletzungsgefahr wiederum erhöht.

Entsprechendes gilt für die vorgenannte DE 28 41 315 A, die eine entsprechende Sicherheitseinrichtung zeigt, bei der der Gassack durch eine Hubkolben-Zylindereinheit ersetzt worden ist, die pyrotechnisch oder hydraulisch bzw. pneumatisch betrieben werden kann. Die Rückbewegung des Kolbens bei einem Aufprall kann dabei durch eine Kraftbegrenzungsvorrichtung gesteuert werden.

Eine nach dem vorgenannten Lösungsprinzip der im Kollisionsfall nachgiebig aufstellbaren Fronthaube arbeitende Konstruktion, jedoch bei windschutzscheibenseitig über Scharniere drehbeweglich angeschlagener Fronthaube, zeigt die DE 201 06 478 U1. Sie sieht einen vorgespannten Feder-Kraftspeicher vor, der im Kollisionsfall elektromotorisch freigegeben, d.h. ausgelöst wird und auch elektromotorisch wieder gespannt, d.h. reversiert werden kann. Diese Konstruktion, die einen pyrotechnischen Antrieb vermeiden will, hat jedoch eine relativ lange Auslösezeit.

Die DE 197 12 961 A1 und die DE 101 11 096 A1 (= EP 1 238 893 A1) schließlich zeigen ebenfalls einen Aufprallschutz durch eine im Kollisionsfall nachgiebig aufstellbarer Fronthaube, die windschutzscheibenseitig über eine Schamieranordnung drehbar angeschlagen ist. Diese Schamieranordnung ist über einen schwenkbar oder verschiebbar gelagerten Schamierträger so an der Karosserie des Vorderwagens befestigt, dass im Falle einer Kollision des Fahrzeuges mit einer Person die Fronthaube mittels einer an dem Schamierträger angreifenden energiespeichemder Einrichtung, z.B. einem Feder-Kraftspeicher, nach oben verschwenkt bzw. verschoben, d.h. angehoben werden kann.

Die DE 101 41 628 A1 offenbart eine gattungsgemäße Vorrichtung.

Dieser bekannten Konstruktion liegt der Gedanke zugrunde, die Scharnieranordnung selbst mit dem angelenkten Schamierträger gegenüber der Karosserie anzuheben, so dass es nicht notwendig ist, eine komplexe Entkoppeleinrichtung zwischen Scharnieranordnung und Fronthaube im Falle eines Aufpralles vorzusehen. Durch die Zwangsführung über den drehbar oder verschiebbar gelagerten Schamierträger wird ferner eine sichere Fixierung der Fronthaube erreicht, was bei einem stärkeren Aufprall des Fahrzeuges auf ein Hindernis ein Eindringen der Fronthaube in die Windschutzscheibe zuverlässig verhindert.

Von diesem Konstruktionsprinzip geht die Erfindung aus.

Im bekannten Fall sind drei Ausführungsformen dargestellt.

Bei der ersten Ausführungsform ist der Schamierträger, der quasi die Grundplatte für die Scharnieranordnung bildet, an seinem vorderen Endabschnitt über eine Drehachse an einer Anschraubplatte mit dem Stützträger für den vorderen Kotflügel gelenkig verbunden. An seinem hinteren Endabschnitt ist der Scharnierträger über eine sensorgesteuerte Verriegelungseinrichtung mit einem exzentrisch gelagerten Riegel arretiert. In einem vorgegebenen Abstand zur Drehachse greift eine energiespeichernde Einrichtung, z.B. eine vorgespannte Schraubenfeder, oder eine Kolben/Zylindereinheit, an dem Scharnierträger gelenkig an. Im Kollisionsfall wird die Verriegelungseinrichtung gelöst und der Schamierträger freigegeben. Dieser schwenkt infolge der vorgespannten Schraubenfeder um die Drehachse schnell nach oben und hebt die Fronthaube samt der Schamieranordnung um einen vorgegebenen Winkel an. Neben der Ausführung mit dem schwenkbar gelagerten Scharnierträger, die auch Gegenstand der DE 101 08 880 A ist, sind auch zwei Ausführungsformen dargestellt, bei denen der Scharnierträger im Kollisionsfall ohne Drehlager durch Kulissenführungen um einen begrenzten Hub nach oben aufgestellt wird. Bei der einen Ausführungsform sitzt der Scharnierträger auf zwei bogenförmig gekrümmten Führungsarmen. Bei der anderen Ausführung ist eine schräg angeordnete Kolben-Zylindereinheit vorgesehen, die über ein kräfteumlenkendes Zwischenelement mit dem Schamierträger verbunden ist.

Die bekannten Ausführungsformen weisen folgende Nachteile auf.

Sowohl im Fall der Aufstellung mit einem Führungsarm als auch im Fall mit zwei Führungsarmen sind bei der Aufstellung Kraftumlenkungen notwendig. Dadurch entstehen neben Reibungsverlusten Kräfteverluste durch Komponentenzerlegung, was sich gerade beim Einsatz von Federspeichern zur Aufstellung nachteilig bemerkbar macht, da diese entsprechend größer dimensioniert werden müssen und damit erheblichen Raum beanspruchen, der am Ort, wo die Aufstellvorrichtung angebracht werden muß, nicht immer zur Verfügung steht.

Ferner ist im Fall der Führung mit zwei Führungsarmen eine gekrümmte Bahn notwendig, was zusätzlich zu dem beschriebenen Nachteil eine gebogene Bahn für die Feder des Federspeichers notwendig macht, die nur sehr aufwendig zu realisieren ist, damit sie auch sicher den Schamierträger aufstellt. Schließlich bietet die bekannte Vorrichtung keine konstruktive Perspektive für eine deformierbar Verrastung sowie das Reversieren der aufgestellten Fronthaube.

Der Erfindung liegt die Aufgabe zugrunde, die eingangs bezeichnete Vorrichtung zum Schutz von Personen bei einem Frontalaufprall auf ein Kraftfahrzeug so auszubilden, dass keine Kraftumlenkung beim Aufstellen der Vorderhaube durch einen Federspeicher notwendig ist, und dass sie konstruktive Perspektiven für eine deformierbare Verrastung und ein Reversieren der aufgestellten Vorderhaube bietet.

Die Lösung dieser gelingt bei einer Vorrichtung zum Schutz von Personen bei einem Frontalaufprall auf ein Kraftfahrzeug, welches eine den Vorderwagen abdeckende, bis zur vorderen Windschutzscheibe führende Fronthaube aufweist, die windschutzscheibenseitig an beiden Fahrzeugseiten jeweils über eine Scharnieranordnung drehbeweglich an der Karosse des Vorderwagen angelenkt ist, bestehend aus einem Scharnierträger für die mittelbare karosserieseitige Anlenkung der Schamieranordnung, der aufstellbar an der Karosse des Vorderwagens angebracht ist, und aus einer an dem Schamierträger angreifenden energiespeichernden Einrichtung in Form einer Federspeicher-Anordnung sowie aus einer sensorgesteuerten Haltevorrichtung für einen Wirkeingriff mit dem Scharnierträger derart, dass im Normalzustand der Scharnierträger niedergehalten ist und im Kollisionsfall sensorbetätigt für eine begrenzte Aufstellbewegung, freigebbar ist erfindungsgemäß dadurch dass eine in einem Gehäuse linear doppelt geführte Führungsgrundplatte als Aufstellplatte für den Schamierträger vorgesehen ist, an der außermittig der Scharnierträger mittels einer Welle wippenartig angelenkt ist und die im Wirkeingriff mit der Federspeicher-Anordnung und der sensorbetätigten Haltevorrichtung steht.

Dadurch dass die Federn der beiden Federspeicher sich beim Auslösen linear aufstellen und dabei linear die doppelt geführte Aufstellplatte nach oben verschieben, ist keine Kraftumlenkung notwendig, was sich vorteilhaft auf die Dimensionierung der Federn der Federspeicher auswirkt und mit Vorteil auch den Aufwand für die Konstruktion hinsichtlich der Führung der Federn und der Aufstellung der Aufstellplatte verringert.

Durch die wippenartige Anlenkung des Scharnierträgers wird auf einfache Weise die entsprechend X-Verschiebung der Fronthaube während der Aufstellung ausgegeben, ohne das System zu blockieren. Es sind keine bogenförmigen Aufstellbahnen notwendig. Durch die Wippe wird auch eine Adaption jeglicher Bauart von Schamieren ermöglicht.

Ferner bietet die erfindungsgemäße Konstruktion mit Vorteil Perspektiven für den Einbau einer Einrichtung zum Verriegeln des Systems im aufgestellten Zustand sowie zum Reversieren der aufgestellten Fronthaube nach einer ungewollten Auslösung.

Ausgestaltungen der Erfindung, insbesondere hinsichtlich der vorgenannten Einrichtung zum Verriegeln und Reversieren sind in Unteransprüchen gekennzeichnet und ergeben sich zudem aus der Figurenbeschreibung.

Anhand eines in den Zeichnungen in verschiedenen Ansichten dargestellten Ausführungsbeispieles wird die Erfindung näher beschrieben.

Es zeigen:
- Figur 1: in einer schematischen isometrischen Darstellung mit weggebrochener vorderer Gehäusewand die erfindungsgemäße Vorrichtung zum Aufstellen einer windschutzscheibenseitig angeschlagenen Fronthaube eines Personenkraftwagens durch zwei Federspeicher nach Auslösung durch einen pyrotechnischen Aktuator im Ruhezustand, d.h. bei vorgespannten Federn, einschließlich der Einrichtung zum Verriegeln der aufgestellten Fronthaube und zum Reversieren nach einer Auslösung ohne Kollision,
- Figur 2: einen Längsschnitt durch die Vorrichtung nach Figur 1,
- Figur 3: eine Querschnittansicht entlang der Linie A-A in Figur 2,
- Figur 4: eine Querschnittansicht entlang der Linie B-B in Figur 2,
- Figur 5: eine Querschnittansicht entlang der Linie C-C in Figur 2,
- Figur 6: eine Querschnittansicht entlang der Linie D-D der Figur 2,
- Figur 7: eine Querschnittsansicht entlang der Linie E-E der Figur 2 entsprechend Figur 4, jedoch bei ausgelöstem Federspeicher,
- Figur 8: in einer Explosionsdarstellung die in den Figuren 1 und 2 dargestellten Sperrklinken zum Halten des Systems im Ruhezustand gegen die Vorspannkraft der Federn im Federspeicher,
- Figur 9: in einer isometrischen Darstellung einen vergrößerten Ausschnitt aus Figur 1 zur näheren Darstellung der Verriegelungs- und Reversier-Einrichtung im Ruhezustand des Systems,
- Figur 10: in einer Explosionsdarstellung die Komponenten der Einrichtung nach Figur 9,
- Figur 11: in einer isometrischen Darstellung entsprechen Figur 9 den Zustand der Verriegelungs- und Reversiereinrichtung im aufgestellten, d.h. im verriegelten Zustand des Systems,
- Figur 12: den gleichen Zustand des Systems wie in Figur 11, jedoch in einer vereinfachteren Darstellung,
- Figur 13: in einer isometrischen Darstellung entsprechend Figuren 9 und 11 den Zustand der Verriegelungs- und Reversiereinrichtung beim Reversieren des Systems von dem aufgestellten Zustand in den Ruhezustand,
- Figur 14: in zwei Figurenteilen A und B in einer schematischen Gesamt-Darstellung die Verbindung der Fronthaube des PKWs über die Scharnieranordnung mit der Vorrichtung nach Figur 1, und zwar im Figurenteil A im Ruhezustand des Systems und im Figurenteil B im aufgestellten Zustand des Systems, und
- Figur 15: in zwei Figurenteilen A und B das Reversieren des aufgestellten Systems unter Zuhilfenahme von Reversierstäben und der Fronthaubenbetätigung.

Die erfindungsgemäße, in den Zeichnungen dargestellte Vorrichtung 100 zum Schutz von Personen bei einem Frontalaufprall auf ein Kraftfahrzeug beruht auf dem Prinzip, dass im Fall einer Kollision mit der Person die windschutzscheibenseitig angeschlagene Fronthaube des Kraftfahrzeuges einschließlich ihrer Schamieranordnung im Anschlagbereich um einen vorgegebenen Hub gegenüber der Karosse des Vorderwagens aufgestellt wird.

Die Vorrichtung 100 weist zunächst ein Gehäuse 1 auf, das die sensorgesteuerten Komponenten für das Aufstellen der Fronthaube enthält, und das über drei Bohrungen 1a an der Karosse des Vorderwagens im Bereich der Schamieranordnungen, vorzugsweise am Stützträger des Kotflügels, angeschraubt ist. Dabei ist an beiden Seiten des Vorderwagens jeweils eine derartige Vorrichtung angebracht.

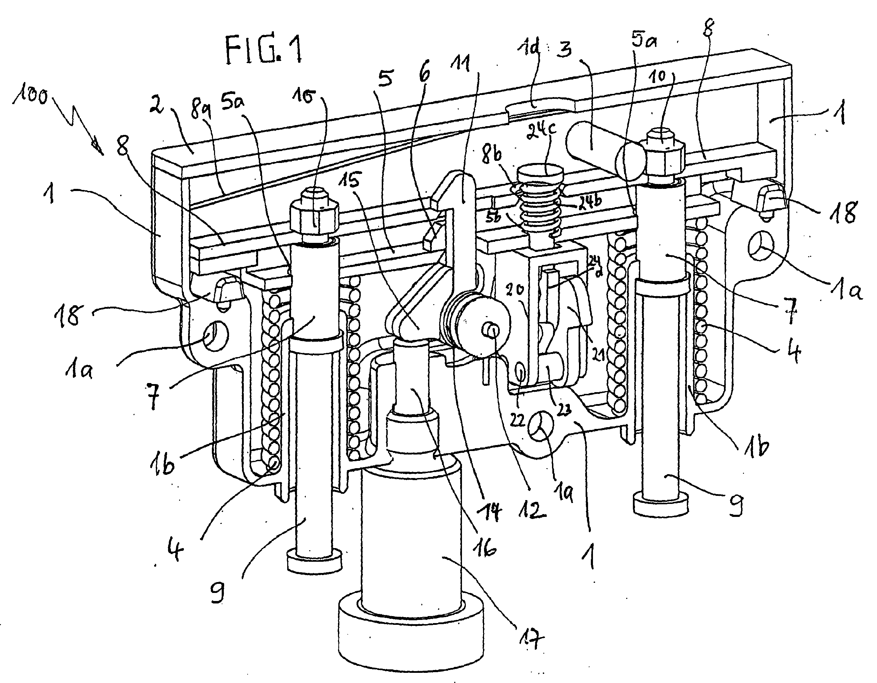

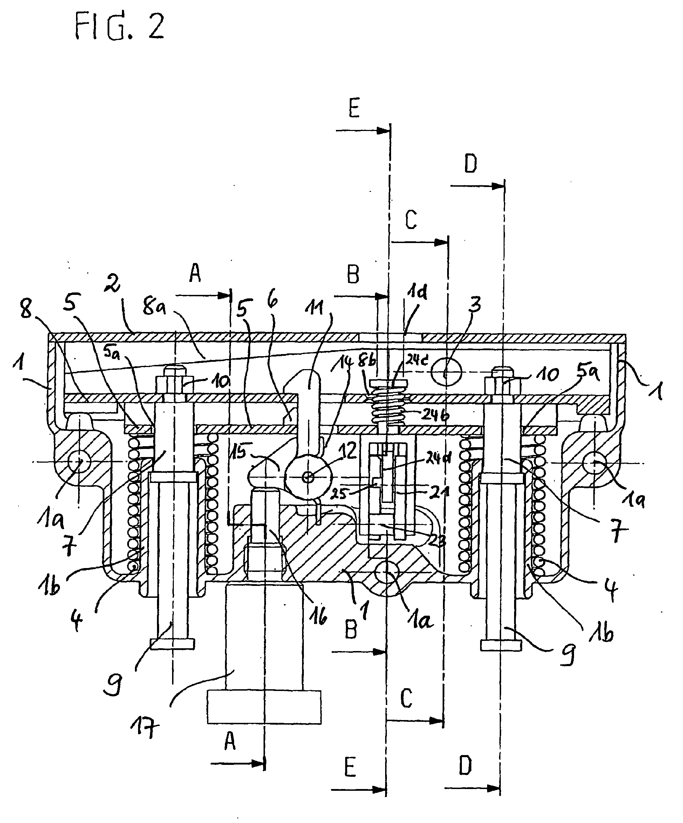

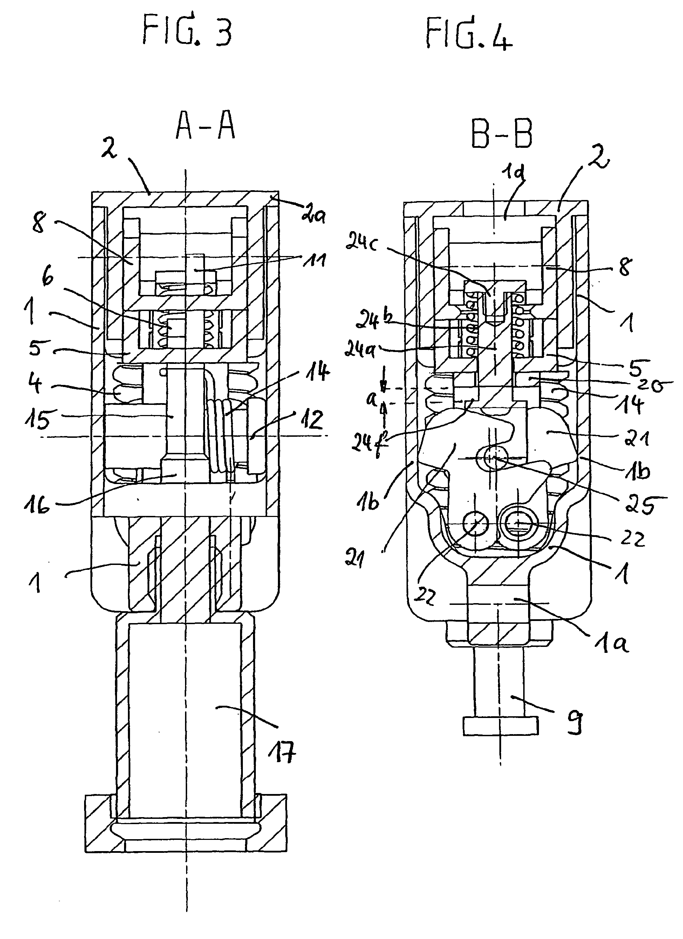

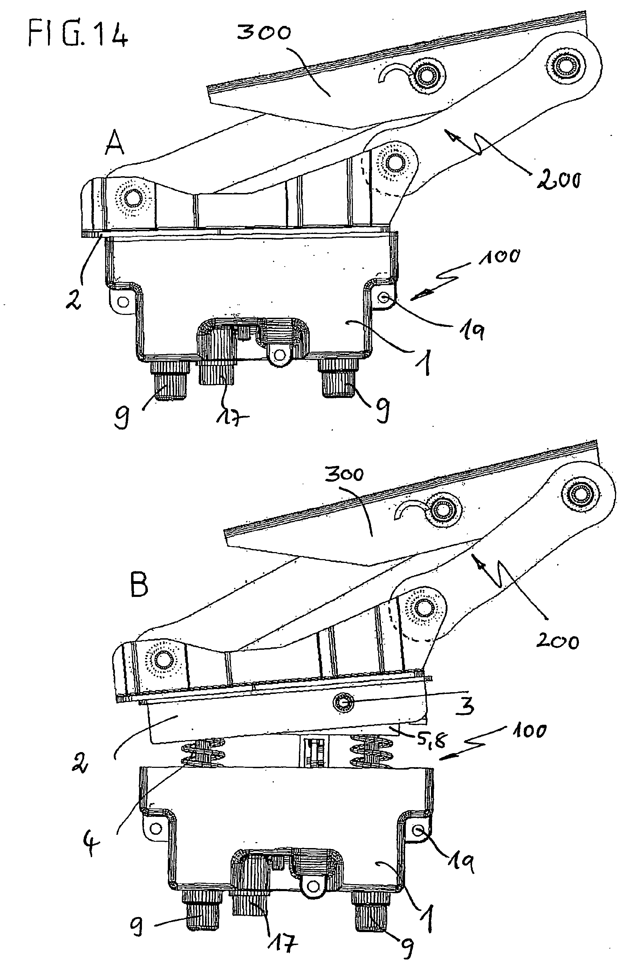

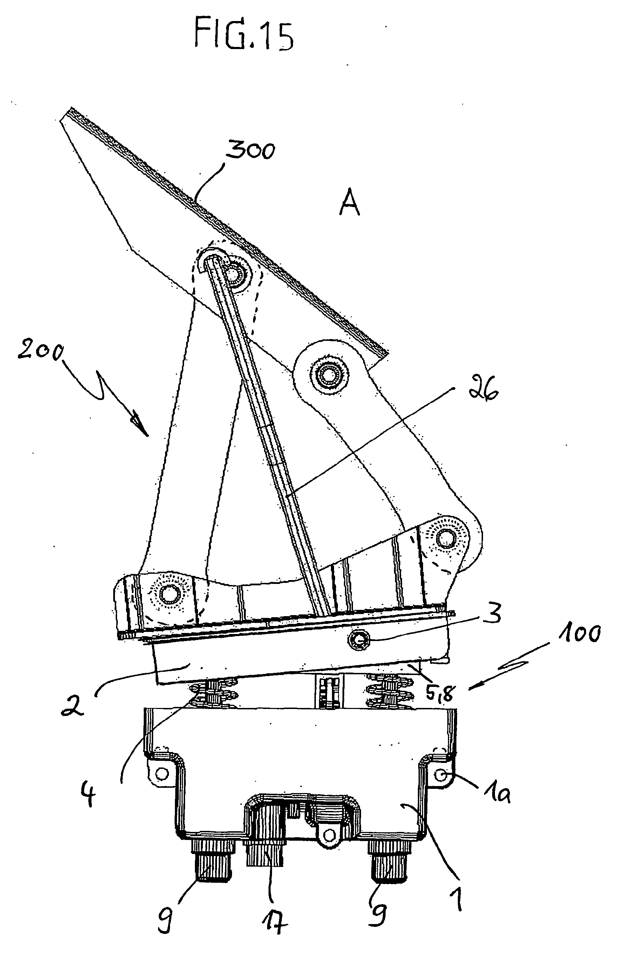

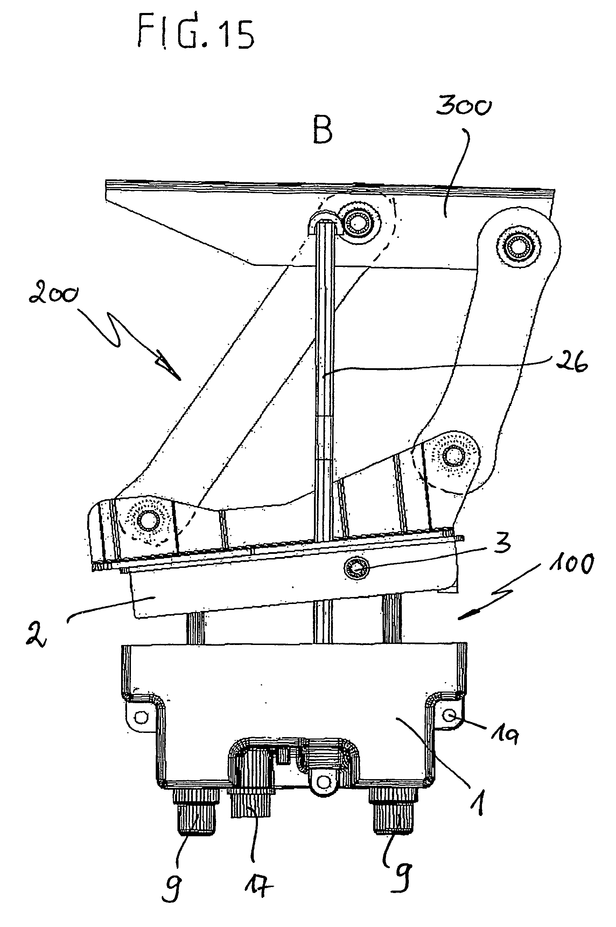

Die in den Figuren 1 und 2 nicht dargestellte, jedoch aus den Figuren 14 und 15 erkennbare Schamieranordnung 200, die im Beispiel zwei Gelenkarme besitzt, ist in bekannter Weise einmal mit der Vorderhaube 300 und zum anderen mit einem Schamierträger 2 der erfindungsgemäßen Vorrichtung 100 befestigt. Dieser Schamierträger 2 ist, wie insbesondere die Figur 3 zeigt, als U-Profil ausgebildet, und liegt im Ruhezustand über seitliche Überstände 2a auf der oberen Stimkante 1c des Gehäuses 1, dieses abdichtend abschließend, auf. Dieses U-Profil ist an einem Bolzen 3 außermittig gegen die Fahrtrichtung drehbeweglich angelenkt. Dadurch ist der Schamierträger 2 als Wippe ausgebildet, d.h. er kann sich beim Ausfahren zum Ausgleich der Bewegung in der Horizontalen, d.h. in X-Richtung, in Fahrtrichtung neigen.

Zum Aufstellen dieses Schamierträgers im Kollisionsfall sind zwei beabstandet im Gehäuse 1 um entsprechende Führungskörper 1 b des Gehäuses 1 angeordnete Druckfedem 4 als Federspeicher vorgesehen, die sich mit ihren unteren Enden jeweils an einem Gehäuseboden abstützen und oben mit einer Vorspannplatte 5 im Wirkeingriff stehen. Mittels dieser Vorspannplatte 5 sind die Druckfedern 4 vorspannbar, wobei mittels einer ersten Halteklinke 6 die Vorspannplatte 5 im gespannten Zustand der Druckfedern niedergehalten wird. Die Vorspannplatte 5 ist, wie die Figur 3 zeigt, als ein nach oben offenes U-Profil ausgebildet, die zwei Bohrungen 5a aufweist, in denen jeweils eine gehäusefeste Führungshülse 7 aufgenommen ist; die Vorspannplatte 5 ist dadurch gegenüber den Führungshülsen 7 verschiebbar gehaltert.

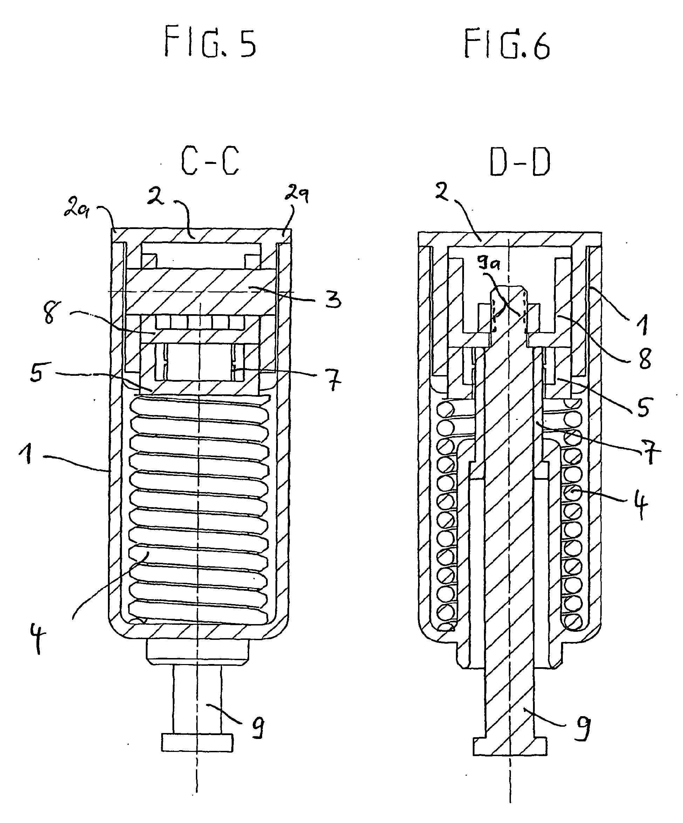

Mit der Vorspannplatte 5 steht im direkten Wirkkontakt eine Führungsgrundplatte 8, die ebenfalls als nach oben offenes U-Profil ausgebildet ist (Figur 3). Sie ist mit zwei Führungssäulen 9, die in den zugehörigen Führungshülsen 7 verschiebbar aufgenommen sind, verschraubt. Dazu besitzt das obere Ende jeder Führungsrolle 9 ein Außengewinde 9a (Figur 6), welches die Führungsgrundplatte in entsprechenden Bohrungen durchdringt und auf das jeweils oberhalb der Führungsgrundplatte eine Mutter 10 aufgeschraubt ist. Die Führungsgrundplatte 8 ist daher zusammen mit den Führungssäulen 9 in den Führungshülsen 7 verschiebbar gehaltert.

Zum Halten der Führungsgrundplatte 8 in der Ruhestellung, d.h. in der Stellung der vorgespannten Federn, ist eine zweite Halteklinke 11 vorgesehen. Zwei elastomere Auflager 18 an den Enden sorgen für die notwendige Vorspannung der Führungsgrundplatte gegen die Halteklinke 11. Die Führungsgrundplatte weist an den Schenkeln ferner jeweils eine fluchtende Öffnung zur axial gesicherten Aufnahme des Bolzens 3 auf, um den die Scharnierträger-Wippe 2 drehbeweglich angelenkt ist. Das U-Profil der Führungsgrundplatte, d.h. die Seitenschenkel des Profils, sind in Fahrtrichtung abgeschrägt (Schräge 8a in den Figuren 1 und 2), so dass im aufgestellten Zustand des Scharnierträgers Raum für eine Schwenkbewegung der Wippe gegen den Uhrzeigersinn vorhanden ist. Das nach oben offene U-Profil der Führungsgrundplatte 8 ist in dem nach unten offenen U-Profil der Schamierträger-Wippe 2 aufgenommen.

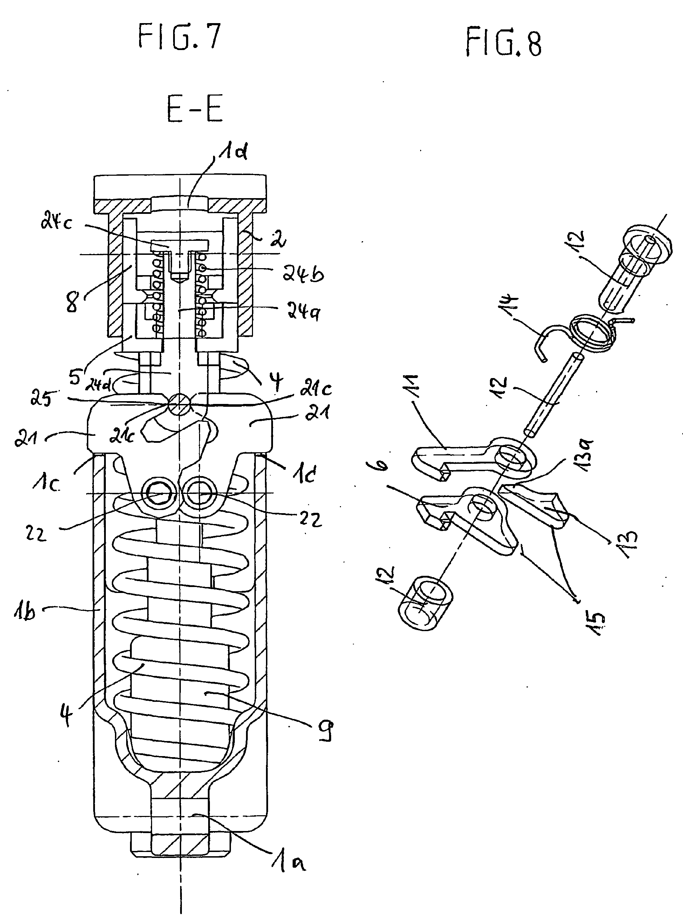

Beide Halteklinken 6, 11 sind um einen gehäusefesten Klinkenbolzen 12 drehbar angelenkt. Dabei besitzt die Halteklinke 6, wie auch die Figur 8 zeigt, ein Anschlagstück 13, das mit der Halteklinke 6 vorzugsweise verschweißt ist, und einen Anschlag 13a zum mitnehmenden Betätigen der Halteklinke 11 aufweist. Wird die erste Halteklinke 6 verschwenkt, wird die zweite Halteklinke 11 über den Anschlag 13a mitgenommen. Beide Halteklinken 6, 11 sind dabei über eine Schenkelfeder 14 in Sperr-, d.h. in Halterichtung vorgespannt. Die erste Halteklinke 6 weist, ebenso wie das Anschlagstück 13a eine Nocke 15 auf, die in Wirkverbindung mit einem Auslösestift 16 eines gehäusefest angebrachten pyrotechnischen Aktuators 17 steht.

Die Figuren 1 und 2 zeigen, wie bereits erwähnt, den Ruhezustand des Systems. Die Figur 14, Figurenteil A, zeigt in einer Gesamtansicht dabei die Stellung der Vorderhaube 300 des PKW und der Schamieranordnung 200 im Ruhezustand der erfindungsgemäßen Aufstell-Vorrichtung 100. Der Schamierträger 2 sitzt dabei dicht auf dem Gehäuse 1 auf.

Wird nun der pyrotechnische Aktuator 17 betätigt, insbesondere sensorgesteuert bei einer Kollision mit einem Fußgänger, wird, wie insbesondere die Figur 1 zeigt, der Stift 16 des Aktuators ausgestoßen und verschwenkt beide Halteklinken 6, 11 im Uhrzeigersinn. Dadurch werden sowohl die Vorspannplatte 5 als auch die Führungsgrundplatte 8 freigegeben, so dass die Schraubenfedern 4 des Federspeichers die Vorspannplatte 5 und durch den direkten Kontakt mit der Führungsgrundplatte 8 auch diese sehr schnell nach oben verschieben, d.h. aufstellen. Dabei wird auch die Scharnierträger-Wippe 2 mit der Scharnieranordnung 200 aufgestellt, die sich in Fahrtrichtung zum Ausgleich der sich durch die lineare Aufstellung einstellenden X-Bewegung der Fronthaube durch die Abschrägung 8a der Führungsgrundplatte 8 entsprechend neigen kann.

Als Ergebnis dieser Aufstellbewegung ist die Fronthaube 300 im windschutzscheibenseitigen Bereich um einen vorgegebenen Hub, beispielsweise 55 mm, aufgestellt (Figur 14, Teil B).

Damit die Fronthaube 200 bei einem Aufprall nicht rückschwingen kann, ist eine Einrichtung 19 zum Verriegeln des Schamierträgers 2 in der ausgefallenen Stellung sowie zum Reversieren des ausgefahrenen Schamierträgers nach einer nicht kollisionsbedingten Auslösung vorgesehen. Eine derartige Einrichtung ist bei den bekannten Konstruktionen nicht vorgesehen, sie stellt daher eine wesentliche Komponente der erfindungsgemäßen Vorrichtung 100 dar. Sie kann jedoch allerdings auch bei anderen Aufstell-Konstruktionen mit Federspeichern vorgesehen werden.

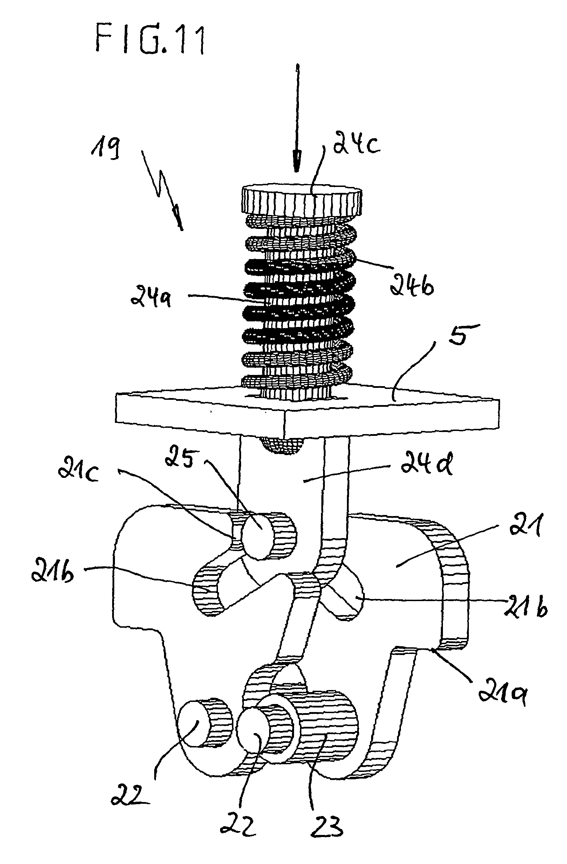

Diese Einrichtung 19 wird im folgenden anhand der Figuren 1, 2, 4, 7 und 9 bis 15 wegen ihrer Bedeutung umfassend beschrieben. Sie weist zunächst einen U-förmigen Halter 20 auf, der fest mit der Vorspannplatte 5 verbunden, z.B. verschweißt ist. Dieser U-förmige Halter bewegt sich daher bei der Aufstellung der Vorspannplatte 5 nach einer Auflösung mit ihr nach oben bzw. bei einer Reversierung des Systems mit ihr nach unten.

In dem U-förmigen Halter 20 sind in entsprechenden Bohrungen 20a zwei Rastklinken 21 mittels Zylinderstifte 22 und Abstandshülsen 23 drehbar gegenläufig angelenkt. Die Rastklinken 21 weisen jeweils eine Anschlagkante 21 a für einen Wirkeingriff mit der oberen Stimkante 1 c des Gehäuses im ausgefahrenen Zustand auf, sowie eine Kulisse 21 b für die Führung eines noch zu beschreibenden Bolzens auf.

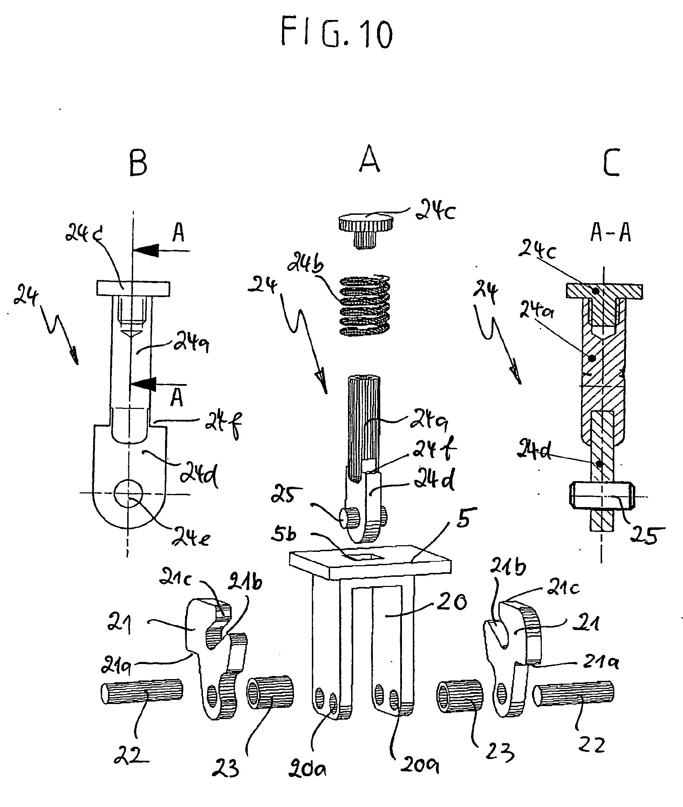

Die Einrichtung 19 weist ferner einen Stößel 24 auf, der, wie insbesondere die Figur 10 zeigt, aus einem oberen zylindrischen Abschnitt 24a, der von einer Schraubenfeder 24b umgeben ist, und in dem ein Kopfteil 24c eingeschraubt ist sowie einem unteren, fußseitig abgerundeten Flachteil 24d mit einer Bohrung 24e, besteht. In der Bohrung 24d ist ein Bolzen 25 mit vorgegebenen Abscher- oder Deformationsverhalten angeordnet, der im Wirkeingriff mit den Rastklinken 21 steht. In dem unteren Abschnitt 24d im Übergang zum oberen Abschnitt 24a ist eine Anschlagkante 24f für einen Anschlag an dem Joch des U-förmigen Halters 20 nach Überwindung einer Steuerstrecke a (Figur 4) vorgesehen.

Der Stößel 24 ragt dabei im montierten Zustand der Einrichtung 19 aus einer Öffnung 5b in der Vorspannplatte 5, wobei die Schraubenfeder 24b zwischen dem Kopf 24c und der Vorspannplatte 5 vorgespannt platziert ist, sowie aus einer Öffnung 8b in der Führungsgrundplatte 8 hervor (Figuren und 2), wobei oberhalb des Kopfes 24c sich eine fluchtende Öffnung 1d in der Schamierträger-Wippe 2 befindet.

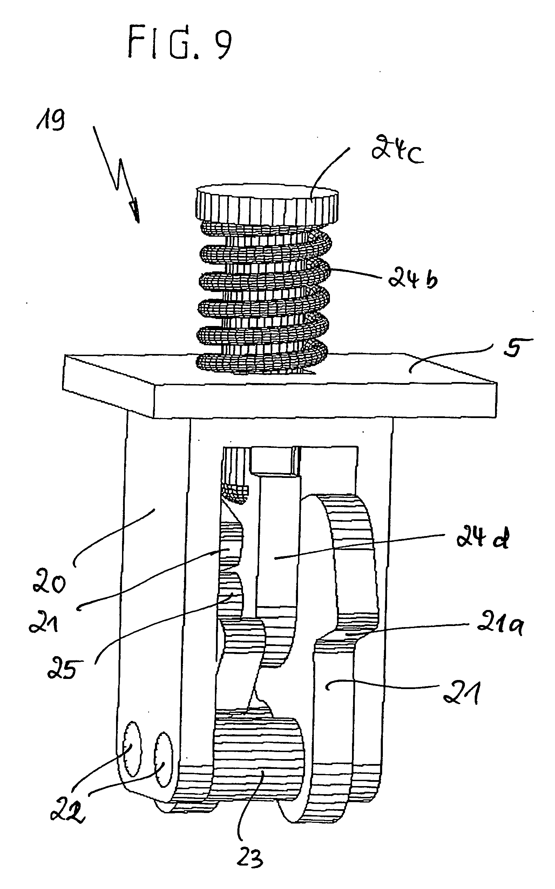

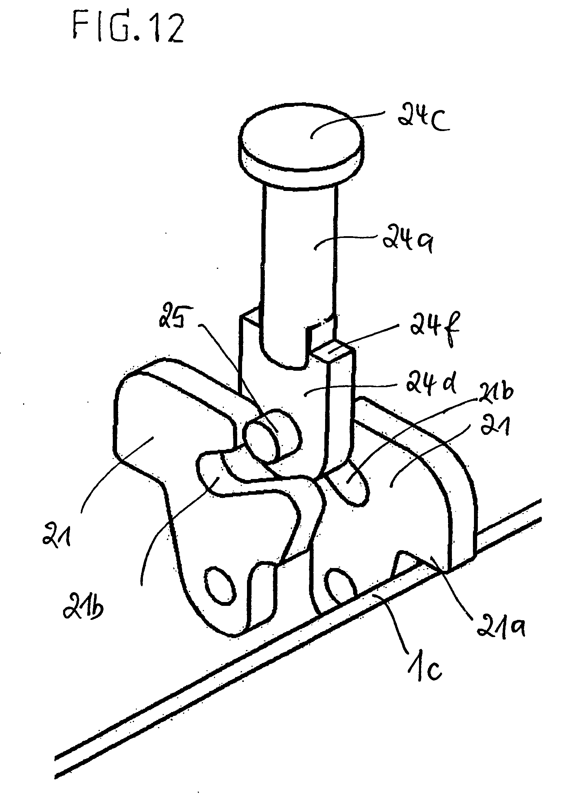

Im Ruhezustand (s. insbesondere Figuren 4 und 9) befindet sich der Bolzen 25 am Ende der Kulissenführung 21 b, die Rastklinken 21 sind eingezogen und liegen an den Seitenwänden des Gehäuses 1 an. Bei einer Aufstellung der Vorspannplatte 5 nach einer Auslösung bewegt sich der U-förmige Halter 20 mit den Rastklinken 21 und dem Stößel 24 nach oben, wobei am Ende der Aufstellbewegung die Anschlagkante 21 a der Rastklinke sich auf Höhe der oberen Kante 1a des Gehäuses 1 befindet (Figur 12). Infolge der Vorspannung der Feder 24b bewegt sich jedoch der Stößel 24 mit Abscherbolzen 25 um die Steuerstrecke a relativ zum U-förmigen Halter 20 weiter nach oben, d.h. bis die Anschlagkante 24f des Stößels an dem Joch des U-förmigen Halters 20 anschlägt, so dass über die Kulissenführung 21 b die Rastklinken21 nach außen verschwenkt werden und ihre Anschlagkanten 21 a auf der oberen Stirnkante 1c des Gehäuses anliegen (Figuren 7, 11 und 12). Da in dieser Position die Frontkanten 21 c der Rastklinken an dem Abscherbolzen beabstandet anliegen, ist eine gewaltsame Rückbewegung der Rastklinke nur unter Abscherung oder Deformation des Bolzens 25 durch die Rastklinken möglich. Der Abscherbolzen dient damit im Kollisionsfall als Deformationselement (Abbau der Kraft über die Scher- oder Deformationsarbeit), d.h. ist hinsichtlich der Fronthaube 300 das Ende ihrer elastischen Verformung erreicht, gibt der Abscherbolzen bei einer vordefinierten Kraft nach und die Scharnierträgerwippe 2 bzw. die sie bewegende Führungsgrundplatte 8 fährt mit ihren Führungssäulen wieder in den Federspeicher 4 ein.

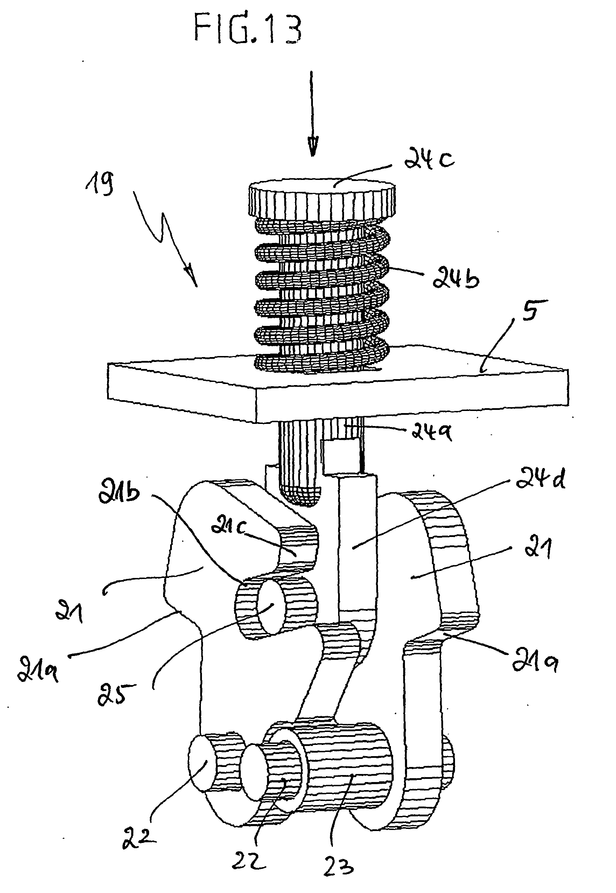

Um nach einer ungewollten Aufstellung der Fronthaube 300 ohne Kollision die Vorrichtung 100 zu reversieren, wird durch die Öffnung 1 d hindurch mittels eines stangenförmigen Werkzeuges, d.h. eines Reversier-Stabes 26 (Figur 15) eine vertikale Kraft auf den Kopf 24c des Stößels 24 aufgebracht. Dadurch bewegt sich dieser nach unten, wobei der Abscherbolzen 25 über die Kulissenführungen 21 b die Rastklinken 21 unter Aufhebung der Verrastung mit den Stimkanten 1 c des Gehäuses zurückschwenken (Figur 13), so dass anschließend der U-förmige Halter 20 mit den eingezogenen Rastklinken 21 in das Gehäuse 1 in die in Figur 4 dargestellte Ausgangslage unter Spannen der Druckfedem 4 zurückgefahren werden kann. Da hierbei beide den beidseitigen Schamieranordnungen 200 zugeordneten Vorrichtungen 100 betätigt werden müssen und zudem relativ hohe Federkräfte bei den Druckfedem überwunden werden müssen, wird, wie in Figur 15 dargestellt, auf jeder Seite der geöffneten Vorderhaube 300 ein Reversierstab 26 in die Öffnung 1d des Schamierträgers 2 eingesetzt und durch vorderseitiges Niederdrücken der Haube unter Ausnützung der Hebelwirkung die notwendige Reversierkraft auf einfache Weise auf beide Stößel 24 aufgebracht.

Das in den Zeichnungen dargestellte Ausführungsbeispiel ist ein sehr vorteilhaftes Ausführungsbeispiel. Es sind jedoch auch Abwandlungen denkbar, ohne dass das Prinzip der Erfindung verlassen wird. So kann beispielsweise anstelle der in Figur 1 dargestellten direkten Auslösung der Halteklinken über die Nocken 15 durch den Stift 16 eine indirekte Auslösung über ein Zug-/Druckkabel nach Art eines Drahtauslösers bei der Fotografie erfolgen. In diesem Fall kann der Aktuator 17 an einer leicht erreichbaren Stelle im Motorraum angeordnet werden, damit die Auswechselung der pyrotechnischen Patrone einfacher vonstatten geht.

Anstelle der dargestellten Verriegelungs- und Reversiervorrichtung 19 mit den verschwenkbaren Rastklinken 21 kann auch eine Verriegelung über eine Zahnstange und eine verschwenkbare Sperrklinke erfolgen, derart, dass beim Aufstellen der Platten 5 bzw. 8 eine Zahnstange über die Sperrklinke ratscht, die jedoch beim Einrasten in die Zähne der Zahnstange eine Bewegung nach unten verhindert. Dabei kann eine Soll-Deformationsstelle im Bereich dieser Verriegelung die Funktion des Abscherbolzens 25 übernehmen. Durch eine Betätigung der Sperrklinke, d.h. durch eine Verschwenkung dieser Sperrklinke kann die Verriegelung aufgehoben werden und der Reversiervorgang durchgeführt werden.

Es ist auch denkbar, die Platten 5 und 8 zu einer einzigen Aufstellplatte zu vereinigen, an der dann die Wippe 2 mittels des Bolzens 3 angelenkt ist. Die Verriegelungs- und Reversiervorrichtung 19 muß dann entsprechend angepasst werden.

Anstelle der Halteklinken 6 und 11 können auch andere bekannte Mechanismen zum Halten einer vorgespannten Platte erfolgen.

Im dargestellten Fall erfolgt die Führung der Platte 8 über Führungssäulen 9, die im Inneren der Druckfedern 4 angeordnet sind. Dadurch lässt sich ein kompakter Aufbau realisieren, was den Vorteil bringt, dass nur ein geringer Einbauraum im Vorderwagen für die Vorrichtung 100 notwendig ist. Im Prinzip können jedoch auch die Führungen außerhalb der Federn angeordnet werden.

Weitere Änderungen sind für den Fachmann möglich.

Zusammengefasst besitzt das erfindungsgemäße System folgende Merkmale und Vorteile.

Beschrieben wird ein Fußgängerschutz, hier speziell durch Anhebung der Motorhaube im hinteren Bereich. Über einen Federspeicher wird der erforderliche Aufstellweg unter Berücksichtigung der Aufstellzeit erzielt.

Die Auslösung erfolgt mittels eines pyrotechnischen Auslösers, der direkt über einen ausstoßbaren Stift bzw. Schubkolben oder indirekt, z. B. ein zwischengeschaltetes Zug-/Druckkabel oder eine pneumatische bzw. hydraulische Steuerleitung die erforderliche Kraft einleitet Aber auch elektrische Auslösesystem sind einsetzbar.

Die Freigabe des Federspeichers erfolgt über Halteklinken.

In ausgefahrener Position verriegelt das System selbsttätig und verhindert ein Rückschwingen der Motorhaube und bietet dem Unfallopfer nach Erreichen der elastischen Verformung der Haube durch Abscheren oder Deformieren eines Defoelementes bei einer vordefinierten Kraft ein Abfangen der aufgebauten Energie in den Federspeicher. hinein.

Die bei der Aufstellung entstehende X-Verschiebung der Fronthaube wird durch eine Wippe ausgeglichen, ohne das System zu blockieren. Hierdurch wird eine Adaption jeglicher Bauart von Scharnieren ermöglicht.

Die Reversierung, d.h. die Rückstellung des Systems erfolgt durch einen Druckstab und die Motorhaube. Hierzu wird insbesondere der Hebelarm der Motorhaube genutzt, um den Federspeicher zu spannen. Diese Aktivität kann durch den Fahrzeugführer selbständig ausgeführt werden.

## Patentansprüche

1. Vorrichtung (100) zum Schutz von Personen bei einem Frontalaufprall auf ein Kraftfahrzeug, welches eine den Vorderwagen abdeckende, bis zur vorderen Windschutzscheibe führende Fronthaube (300) aufweist, die windschutzscheibenseitig an beiden Fahrzeugseiten jeweils über eine Scharnieranordnung (200) drehbeweglich an der Karosse des Vorderwagens angelenkt ist,
bestehend aus einem Scharnierträger (2) für die mittelbare karosserieseitige Anlenkung der Schamieranordnung (200), der aufstellbar an der Karosse des Vorderwagens angebracht ist, und aus einer an dem Schamierträger (2) angreifenden energiespeichemden Einrichtung in Form einer Federspeicher-Anordnung (4) sowie aus einer sensorgesteuerten Haltevorrichtung ((11) für einen Wirkeingriff mit dem Scharnierträger (2), derart, dass im Normalzustand der Scharnierträger niedergehalten ist und im Kollisionsfall . sensorbetätigt für eine begrenzte Aufstellbewegung freigebbar ist, **dadurch gekennzeichnet, dass** eine in einem Gehäuse (1) linear doppelt geführte Führungsgrundplatte (8) als Aufstellplatte für den Scharnierträger (2) vorgesehen ist, an der außermittig der Schamierträger (2) mittels einer Welle (3) wippenartig angelenkt ist und die im Wirkeingriff mit der Federspeicher-Anordnung (4) und der sensorbetätigten Haltevorrichtung (11) steht.

2. Vorrichtung nach Anspruch 1, **dadurch gekennzeichnet, dass** zwischen Führungsgrundplatte (8) und Federspeicher-Anordnung (4) eine Vorspannplatte (5) angeordnet ist, der eine mit der Haltevorrichtung (11) für die Führungsgrundplatte (8) gekoppelte, weitere Haltevorrichtung (6) zugeordnet ist, die auf der einen Seite im direkten Wirkkontakt mit den Federn (4) der Federspeicher-Anordnung und auf der anderen Seite im direkten Wirkkontakt mit der Führungsplatte (8) steht.

3. Vorrichtung nach Anspruch 2, **dadurch gekennzeichnet, dass** sowohl die Führungsgrundplatte (8) als auch die Vorspannplatte (5) als U-förmiges Profilteil ausgebildet sind und beide mit der Profilöffnung nach oben angeordnet sind, unter direktem Kontakt der Schenkel des Profils der Vorspannplatte (5) mit dem Verbindungsjoch des Profils der Führungsgrundplatte (8), und dass das Profil der Führungsgrundplatte (8) für eine Wippbewegung des Scharnierträgers (2) bei seiner Aufstellung eine Schräge (8a) aufweist.

4. Vorrichtung nach einem der Ansprüche 1 bis 3, **dadurch gekennzeichnet, dass** die Federspeicher-Anordnung zwei entlang der Längsausdehnung der Führungsgrundplatte (8) beabstandet angeordnete Druckfedern (4) aufweist, die sich auf der einen Seite am Boden des Gehäuses abstützen und plattenseitig vorspannbar sowie durch die sensorgesteuerte Haltevorrichtung (6,11) freigebbar sind.

5. Vorrichtung nach Anspruch 4, **dadurch gekennzeichnet, dass** im Innern der Druckfedem (4) in gehäusefesten Führungshülsen (7) geführte Führungssäulen (9) aufgenommen sind, die kopfseitig mit der Führungsgrundplatte (8) verschraubt sind.

6. Vorrichtung nach einem der Ansprüche 1 bis 5, **dadurch gekennzeichnet, dass** die sensorbetätigte Haltevorrichtung aus mindestens einer federvorgespannten Sperrklinke (6,11) für den plattenseitigen Wirkeingriff besteht, die einen Nocken (15) für einen Wirkkontakt mit einem stiftausstoßenden pyrotechnischen Auslöser (16,17) besitzt.

7. Vorrichtung nach einem der Ansprüche 1 bis 6, **dadurch gekennzeichnet, dass** eine Einrichtung (19) zum verformbaren Verriegeln des Schamierträgers (2) im aufgestellten Zustand und zu seinem Reversieren in den Grundzustand vorgesehen ist.

8. Vorrichtung nach Anspruch 7, **dadurch gekennzeichnet, dass** die Einrichtung (19) einen U-förmigen, plattenseitig befestigten Halter (20) aufweist, in welchem zwei Rastklinken (21) gegenläufig verschwenkbar angelenkt sind, die jeweils eine Kulisse (21 b) für die Aufnahme eines Bolzens (25) eines federvorgespannt im Halter (20) angeordneten Stößels (24) sowie eine Anlagenkante (21 a) für einen verriegelnden Wirkeingriff mit einer Gehäusekante (1 c) und eine Frontkante (21 c) für einen Wirkeingriff mit dem Bolzen (25) jeweils im aufgestellten Zustand des Schamierträgers (2) besitzen.

9. Vorrichtung nach Anspruch 8, **dadurch gekennzeichnet, dass** der Bolzen (25) auf eine vorgegebene Abscherkraft oder Verformkraft ausgelegt ist.

10. Vorrichtung nach Anspruch 8 oder 9, **dadurch gekennzeichnet, dass** die Einrichtung (19) so ausgebildet ist, dass durch Aufbringen einer äußeren Kraft auf den Stößel (24) im aufgestellten Zustand des Schamierträgers (2) die Rastklinken (21) unter Aufhebung der Verriegelung unter Zuhilfenahme der Vorderhaube als Hebelarm zurück schwenkbar sind und der Scharnierträger (2) gegen die Federkraft der Federspeicher-Anordnungen in seine Grundstellung zurückführbar ist.

## Claims

1. Device (100) for protecting individuals in the event of a frontal impact with a motor vehicle which comprises a front bonnet (300) covering the front vehicle section and leading up to the front windscreen and which
is rotatably articulated on the windscreen side to the body of the front vehicle section at both vehicle sides via a respective hinge arrangement (200),
consisting of a hinge support (2) for the indirect articulation, on the body side, of the hinge arrangement (200), which support is attached to the body of the front vehicle section such that it can be erected, and of an energy-accumulating mechanism, which acts on the hinge support (2), in the form of a spring accumulator arrangement (4), as well as of a sensor-controlled retaining device (11) for active engagement with the hinge support (2) such that the hinge support is held down in the normal state and can be released by sensor actuation for a limited erection movement in the case of a collision, **characterised in that** a guide base plate (8), which is doubly guided in linear fashion in a housing (1), is provided as an erection plate for the hinge support (2), to which plate the hinge support (2) is eccentrically articulated like a rocker by means of a shaft (3) and is in active engagement with the spring accumulator arrangement (4) and the sensor-actuated retaining device (11).

2. Device according to Claim 1, **characterised in that** a biasing plate (5) is disposed between the guide base plate (8) and the spring accumulator arrangement (4), with which biasing plate a further retaining device (6) is associated, the latter being coupled to the retaining device (11) for the guide base plate (8) and being in direct active contact with the springs (4) of the spring accumulator arrangement on one side and in direct active contact with the guide plate (8) on the other side.

3. Device according to Claim 2, **characterised in that** both the guide base plate (8) and the biasing plate (5) are formed as a U-shaped profiled part and both are disposed with the profile opening at the top, with the legs of the profile of the biasing plate (5) being in direct contact with the connecting yoke of the profile of the guide base plate (8), and that the profile of the guide base plate (8) comprises a slope (8a) for a rocking movement of the hinge support (2) when it is erected.

4. Device according to any one of Claims 1 to 3, **characterised in that** the spring accumulator arrangement comprises two compression springs (4) which are disposed in spaced.fashion along the longitudinal extent of the guide base plate (8), are supported at the bottom of the housing on one side, can be biased on the plate side and released by the sensor-controlled retaining device (6, 11).

5. Device according to Claim 4, **characterised in that** guide columns (9), which are guided in guide sleeves (7) rigid with the housing, are accommodated in the interior of the compression springs (4), which columns are screwed at the top to the guide base plate (8).

6. Device according to any one of Claims 1 to 5, **characterised in that** the sensor-actuated retaining device consists of at least one spring-biased pawl (6, 11) for active engagement on the plate side, which pawl has a cam (15) for active contact with a pin-expelling pyrotechnic trigger (16, 17).

7. Device according to any one of Claims 1 to 6, **characterised in that** a mechanism (19) is provided for locking the hinge support (2) in the erected state such that it can be deformed and for reversing it into the normal state.

8. Device according to Claim 7, **characterised in that** the mechanism (19) comprises a U-shaped mount (20) which is fastened on the plate side and in which two detents (21) are articulated so as to be pivotable in opposite directions, which detents in each case have a gate (21b) for accommodating a pin (25) of a ram (24) which is disposed in spring-biased fashion in the mount (20), as well as a contact edge (21a) for locking active engagement with a housing edge (1c) and a front edge (21c) for active engagement with the pin (25) in each case when the hinge support (2) is in the erected state.

9. Device according to Claim 8, **characterised in that** the pin (25) is designed for a predetermined shear force or deformation force.

10. Device according to Claim 8 or 9, **characterised in that** the mechanism (19) is formed such that, by applying an external force to the ram (24) when the hinge support (2) is in the erected state, the detents (21) can be pivoted back while terminating the locking state with the aid of the front bonnet as a lever arm, and the hinge support (2) can be returned to its normal position against the spring force of the spring accumulator arrangements.

## Revendications

1. Dispositif (100) pour protéger les personnes en cas de collision frontale contre un véhicule automobile, lequel présente un capot (300) qui recouvre l'avant de la voiture jusqu'au pare-brise avant, est fixé de manière articulée et mobile en rotation à la carrosserie de l'avant de la voiture du côté du pare-brise des deux côtés du véhicule à chaque fois par le biais d'un arrangement de charnière (200), composé d'un support de charnière (2), pour la fixation articulée indirecte du côté de la carrosserie de l'arrangement de charnière (200), lequel est monté sur la carrosserie de l'avant de la voiture de manière à pouvoir être levé, et d'un dispositif accumulateur d'énergie qui vient en prise sur le support de charnière (2), sous la forme d'un arrangement accumulateur à ressort (4) ainsi que d'un dispositif de maintien (11) commandé par capteur pour une prise active avec le support de charnière (2) de telle sorte qu'en situation normale le support de charnière soit maintenu en bas et qu'en cas de collision il puisse être libéré sous la commande d'un capteur pour effectuer un mouvement de levage limité, **caractérisé en ce qu'**une plaque de base de guidage (8) à double guidage linéaire dans un boîtier (1) est prévue comme plaque de levage pour le support de charnière (2), sur laquelle le support de charnière (2) est fixé de manière articulée à la manière d'une bascule au moyen d'un arbre (3) et qui se trouve en prise active avec l'arrangement accumulateur à ressort (4) et 1 dispositif de maintien (11) commandé par capteur.

2. Dispositif selon la revendication 1, **caractérisé en ce qu'**entre la plaque de base de guidage (8) et l'arrangement accumulateur à ressort (4) est disposée une plaque de précontrainte (5) à laquelle est associé un dispositif de maintien (6) supplémentaire couplé avec le dispositif de maintien (11) pour la plaque de base de guidage (8) et qui se trouve d'un côté en contact actif direct avec les ressorts (4) de l'arrangement accumulateur à ressort et de l'autre côté en contact actif direct avec la plaque de guidage (8).

3. Dispositif selon la revendication 2, **caractérisé en ce que** la plaque de base de guidage (8) et la plaque de précontrainte (5) sont toutes deux réalisées sous la forme d'une pièce profilée en U et sont toutes deux disposées avec l'ouverture du profil vers le haut, sous contact direct de la branche du profil de la plaque de précontrainte (5) avec l'entretoise de liaison du profil de la plaque de base de guidage (8) et **en ce que** le profil de la plaque de base de guidage (8) présente un biseau (8a) pour un mouvement de basculement du support de charnière (2) lors de son levage.

4. Dispositif selon l'une des revendications 1 à 3, **caractérisé en ce que** l'arrangement accumulateur à ressort présente deux ressorts de compression (4) disposés en étant espacés le long de l'extension longitudinale de la plaque de base de guidage (8), lesquels s'appuient d'un côté au fond du boîtier et peuvent, du côté de la plaque, être précontraints et libérés par le dispositif de maintien (6,11) commandé par capteur.

5. Dispositif selon la revendication 4, **caractérisé en ce qu'**à l'intérieur des ressorts de compression (4) sont logées des colonnes de guidage (9) guidées dans des douilles de guidages (7) fixes du boîtier et dont la tête est fixée par vissage avec la plaque de base de guidage (8).

6. Dispositif selon l'une des revendications 1 à 5, **caractérisé en ce que** le dispositif de maintien commandé par capteur se compose d'au moins un cliquet de blocage (6, 11) précontraint par ressort pour la prise active du côté de la plaque, lequel possède un ergot (15) pour un contact actif avec un déclencheur pyrotechnique (16, 17) d'éjection de goupille.

7. Dispositif selon l'une des revendications 1 à 6, **caractérisé en ce qu'**il est prévu un dispositif (19) pour le verrouillage déformable du support de charnière (2) en situation levée et pour son retour en position de base.

8. Dispositif selon la revendication 7, **caractérisé en ce que** le dispositif (19) présente un support (20) en forme de U fixé du côté de la plaque dans lequel deux cliquets d'enclenchement (21) sont articulés de manière à pouvoir pivoter en sens inverse, lesquels possèdent à chaque fois une coulisse (21b) pour recevoir un goujon (25) d'un poussoir (24) disposé dans le support (20) sous la précontrainte d'un ressort ainsi qu'un bord d'appui (21a) pour une prise active verrouillée avec un bord du boîtier (1c) et un bord frontal (21c) pour une prise active avec le goujon (25) à chaque fois en situation levée du support de charnière (2).

9. Dispositif selon la revendication 8, **caractérisé en ce que** le goujon (25) est conçu avec une force de cisaillement ou une force de déformation prédéfinie.

10. Dispositif selon la revendication 8 ou 9, **caractérisé en ce que** le dispositif (19) est configuré de telle sorte que l'application d'une force extérieure sur le poussoir (24) lorsque le support de charnière (2) est en situation levée permet de basculer en arrière les cliquets d'enclenchement (21) en supprimant le verrouillage à l'aide du capot faisant office de bras de levier et de ramener le support de charnière (2) dans sa position de base contre la force de ressort des arrangements accumulateurs à ressort.
